(19) **Europäisches Patentamt**

**European Patent Office**

**Office européen des brevets**

(11) Veröffentlichungsnummer: **0 665 664 A1**

## (12) EUROPÄISCHE PATENTANMELDUNG

(21) Anmeldenummer: **95100395.3**

(22) Anmeldetag: **13.01.95**

(51) Int. Cl.⁶: **H04L 1/00**, H04Q 11/04, H04M 3/24

(30) Priorität: **01.02.94 CH 285/94**

(43) Veröffentlichungstag der Anmeldung:
**02.08.95 Patentblatt 95/31**

(84) Benannte Vertragsstaaten:
**AT CH DE FR GB LI**

(71) Anmelder: **SIEMENS-ALBIS AKTIENGESELLSCHAFT**
**PV/Patente und Verträge**
**Postfach,**
**Albisriederstrasse 245**
**CH-8047 Zürich (CH)**

(72) Erfinder: **Bosatta, Franco**
**Kleinhüningerstrasse 179**
**CH-4057 Basel (CH)**
Erfinder: **Zehnder, Charles**
**Tellerweg 20**
**CH-4102 Binningen (CH)**
Erfinder: **Spichiger, Andreas**
**Lüfternweg 16**
**CH-3052 Zollikofen (CH)**
Erfinder: **Nussbaumer, Iwan**
**Talweg 15**
**CH-4254 Liesberg (CH)**
Erfinder: **Grabowski, Jens, Dr.**
**Gesellschaftstrasse 75**
**CH-3012 Bern (CH)**
Erfinder: **Suter, Stefan**
**Fischerweg 9**
**CH-3012 Bern (CH)**
Erfinder: **Schoenberger, Roger, Dr.**
**Loretohöhe 2**
**CH-6300 Zug (CH)**
Erfinder: **Rüfenacht, Christoph**
**Dorfstrasse 13**
**CH-3205 Mauss (CH)**

(54) **Verfahren zum Testen von Fernmeldeanlagen oder Teilen davon.**

㊳ In einem ersten Schritt werden mit Hilfe einer Eingabeeinheit (ME) Meldungsdiagramme erstellt, die mit einem Testgenerator (TGEN) in einem zweiten Schritt in einen alle Testfälle enthaltenden dynamischen Teil transformiert werden. Der dynamische Teil wird in einem dritten Schritt in einer Verbindungseinheit (VBE) mit Daten und Testeinschränkungen angereichert, um spezifische Testfälle zu erhalten. Die Ergebnisse der einzelnen Verfahrensschritte werden dabei in einer Meldungsdefinitionsdatei (MDD), einer Testbeschreibungsdatei (TBD) bzw. einer Testdatei (ATF) abgelegt. Die Daten und die Testeinschränkungen zur Anreicherung des dynamischen Teils sind in einer Datentypendatei (DD) enthalten.

In einer bevorzugten Ausführungsform werden die Meldungsdiagramme gemäss der CCITT- Empfehlung Z.120 (Message Sequence Charts) erstellt und die Daten und allfällige Testeinschränkungen mit den Spezifikationssprachen ASN.1 (Abstract Syntax Notation No. 1, CCITT- Empfehlung X.208) und/oder TTCN (International Standard 9646-3) beschrieben. Ferner werden die standardisierten Meldungsdiagramme mit verschiedenen Spracherweiterungen ergänzt, damit Testfälle vollständig beschrieben werden können.

EP 0 665 664 A1

Fig. 2

Die vorliegende Erfindung betrifft ein Verfahren nach dem Oberbegriff des Patentanspruchs 1.

Testverfahren werden zur Erkennung von Fehlern in Hard- und Software- Produkten verwendet, damit unter späteren Betriebsbedingungen kein oder zumindest nur geringes Fehlverhalten auftreten kann. Zudem geben ausführliche und allumfassende Tests Hinweise auf die Qualität eines Produktes. Insbesondere im Bereich der Fernmeldetechnik werden aus diesem Grund von Kunden, die meistens Betreiber von nationalen Fernmeldenetzen sind, sogenannte Anpassungstests (engl. Conformance tests) verlangt. Die Anpassungstests sollen dabei geforderte, meist in Normen von Standardisierungsbehörden definierte Schnittstellen, die zwischen einzelnen Komponenten von Systemen oder zwischen verschiedenen Systemen vorhanden sind, überprüfen und dabei feststellen, ob vollständige Übereinstimmung und Verträglichkeit mit den Normen gegeben sind. In der Fernmeldtechnik sind es vor allem internationale Standardisierungsbehörden wie die ITU- (International Telecommunication Union) - früher als CCITT- (Comité Consultatif International Télégraphique et Téléphonique) bezeichnet - oder dem ETSI- (European Telecommunication Standard Institute), welche Normen für Schnittstellen und deren Protokolle in sogenannten Empfehlungen erlassen, damit Geräte von verschiedenen Herstellern zusammengeschaltet werden können. Häufig werden solche Normen auch von den Betreibern der nationalen Fernmeldenetze mit spezifischen Funktionen ergänzt.

Gegenstand eines Anpassungstests können beispielsweise Protokolle der Schicht 3 des OSI- (Open System Interconnection)- Referenzmodells in einer LTG- (Line Trunk Group)- Netzbaugruppe eines ISDN- (Integrated Services Digital Network)- Vermittlungssystems sein (siehe dazu CCITT- Empfehlung X.200, Blue Book, Vol. VIII.4, Genf: ITU 1989). Ein Protokoll für die Schicht 3 ist durch die CCITT- Empfehlung Q.931 (CCITT- Empfehlungen Q.930 bis Q.940: Digital Subscriber Signalling System No. 1, Network Layer, User- Network Management, CCITT, Genf, 1989) definiert und in der LTG- Netzbaugruppe implementiert, wobei jedoch kein direkter Zugriff von aussen auf diese Protokollschicht möglich ist. Darüber hinaus weist eine LTG- Netzbaugruppe von einem Teilnehmer aus gesehen lediglich eine standardisierte Schnittstelle auf, nämlich eine zum Anschliessen eines Endgerätes, das beispielsweise ein Telefonapparat, ein Fernkopierer oder dgl. sein kann. Sämtliche weiteren Schnittstellen einer LTG- Netzbaugruppe zu anderen internen Komponenten der Fernmeldeanlage sind nicht standardisiert sondern herstellerspezifisch, weshalb eine Überprüfung üblicherweise nicht Gegenstand von Anpassungstests ist.

Wie die Entwicklung von Software zur Ausführung der oben erwähnten Protokolle kann auch das Testen in verschiedene Phasen und/oder Modulen unterteilt werden. Ein problemloses Zusammenfügen und Ausführen von Softwaremodulen ist dabei nur dann möglich, wenn die einzelnen Phasen aufeinander abgestimmt sind. In den meisten Fällen ist eine Übereinstimmung nicht gewährleistet, weshalb häufig viel Zeit und Aufwand in Kauf genommen werden muss, um eine Anpassung der verschiedenen Phasen vorzunehmen oder um redundante Informationen zu überprüfen.

Grundsätzlich lässt sich das Testen von Software in fünf verschiedene Phasen unterteilen, nämlich in eine Analyse-, in eine Beschreibungs-, in eine Implementations-, in eine Ausführungs- und in eine Evaluationsphase. Jede dieser Phasen dient einem bestimmten Zweck und liefert am Ende ein Dokument mit spezifischen Resultaten. Im folgenden wird auf diese fünf Phasen näher eingegangen.

Der Zweck der Analysephase ist zu definieren, was getestet werden soll, d.h. welche Testfälle notwendig sind, um sämtliche Erwartungen an die Software überprüfen zu können. Aus dieser Phase resultiert demzufolge eine Liste von zu untersuchenden Testfällen.

In der Beschreibungsphase wird festgelegt, wie die verschiedenen, in der Analysephase bestimmten Testfälle realisiert werden müssen. Dies schliesst auch mit ein, welche Voraussetzungen zur Erhaltung eines gültigen Ergebnisses benötigt werden, welche Zustände der vorhandenen Komponenten des Testsystems notwendig sind, wie diese Zustände erreicht werden können, etc. Das am Ende dieser Phase erstellte Dokument enthält exakte Beschreibungen von sämtlichen Voraussetzungen und des kompletten Meldungsflusses für alle Testfälle.

Die Implementationsphase besteht im wesentlichen aus der Transformation der spezifizierten Testfälle in ausführbare Sequenzen. Diese Sequenzen sind jedoch noch mit Daten anzureichern, die noch nicht in der Beschreibungsphase angegeben wurden, die jedoch für die Ausführung der Sequenzen notwendig sind. Die Sequenzen sind normalerweise in einer Hochsprache implementiert. Als Resultat dieser Implementationsphase wird eine ausführbare Testsequenz erzeugt, die auf einem bestimmungsgemässen Testsystem in der Ausführungsphase ausgeführt wird.

Die Ausführungsphase liefert als Resultat für jeden durchgeführten Testfall eine Schlussentscheidung. Mögliche Schlussentscheidungen sind "pass", "fail" oder "inconclusive".

Schliesslich folgt die Evaluationsphase, in der die Schlussentscheidungen gewertet werden. Lautet die Schlussentscheidung "pass", so kann davon ausgegangen werden, dass sowohl der spezifische Testfall als auch die damit getestete Software korrekt ablaufen. Lautet die Schlussentscheidung "fail" oder "inconclusive", so muss weiter untersucht werden, ob Fehler im Testfall aufgetreten sind oder ob der getestete

EP 0 665 664 A1

Softwareteil Fehler enthält. Als Resultat dieser Evaluationsphase wird eine erste Liste mit den Testfällen, bei denen keine Fehler aufgetreten sind, und eine zweite Liste mit den Testfällen, bei denen Fehler während der Ausführung aufgetreten sind, erstellt.

In einem idealen Phasenmodell der oben erwähnten Art sind sämtliche Phasen nahtlos miteinander verbunden. In praktischen Fällen kann jedoch meist nicht davon ausgegangen werden. Tatsache ist häufig, dass die Phasen nicht aufeinander abgestimmt sind, also eine Disharmonie bei den Phasenübergängen vorhanden ist. Dies soll am Beispiel einer Fernmeldeanlage erläutert werden:

In der Analysephase wird ein informelles Dokument erstellt, das die Basis für die Beschreibungsphase bildet. Der Phasenübergang von der Analysephase zur Beschreibungsphase ist dabei der einfachste Übergang von allen möglichen, da in beiden Phasen ein Textdokument als Grundlage verwendet wird. Zur Beschreibung von einzelnen Testfällen können beispielsweise Meldungsdiagramme (Message Sequence Charts: CCITT- Empfehlung Z.120) eingesetzt werden. Meldungsdiagramme geben jedoch lediglich über die zeitliche Folge von Meldungen über eine Schnittstelle Aufschluss und sind demzufolge mit weiteren Bedingungen und Meldungsvoraussetzungen anzureichem. Auf diese Art und Weise erstellte Dokumente können in der Implementationsphase direkt verwendet werden, vorausgesetzt, dass Werkzeuge zur Verarbeitung der Dokumente zur Verfügung stehen. Sämtliche informellen und noch fehlenden Informationen - wie beispielsweise die Nummer eines gerufenen Teilnehmers - müssen jedoch noch ergänzt werden, damit die gesamte Information in eine ausführbare Hochsprache - wie beispielsweise C oder SDL- (Specification and Description Language) (CCITT- Empfehlung Z.100) - transformiert werden kann.

In der Ausführungsphase wird zumindest vorausgesetzt, dass die Testfälle in der von der Implementierungsphase erzeugten Hochsprache vorhanden sind. Häufig kann jedoch nicht erwartet werden, dass alle Beziehungen zwischen sämtlichen Teilen eines Testfalls bekannt sind. Aus diesem Grund müssen die fehlenden Beziehungen von Hand hinzugefügt werden.

Das gleiche gilt für die von der Evaluationsphase erzeugten Resultatenlisten, die ebenso von Hand aufgrund der in der Ausführungsphase erhaltenen Ergebnisse erstellt werden müssen.

Die erwähnten manuellen Eingriffe im angegebenen Beispiel stellen wesentliche Fehlerquellen im gesamten Testablauf dar. Insbesondere weist der Phasenübergang von der Beschreibungszur Implementationsphase eine enorme Fehleranfälligkeit auf, da dieser Übergang einen grossen manuellen Aufwand für die Eingabe der fehlenden Informationen erfordert, um einen ausführbaren Testfall erzeugen zu können. Kein anderer Übergang weist eine ähnlich hohe Fehleranfälligkeit auf.

Der vorliegenden Erfindung liegt daher die Aufgabe zugrunde, ein Verfahren zum Testen von Fernmeldeanlagen oder Teilen davon anzugeben, wobei die Fehleranfälligkeit reduziert und somit die Qualität der Tests erhöht wird.

Diese Aufgabe wird durch die im kennzeichnenden Teil des Patentanspruchs 1 angegebenen Massnahmen gelöst. Vorteilhafte Ausgestaltungen der Erfindung sind in weiteren Ansprüchen angegeben.

Mit dem erfindungsgemässen Testverfahren wird eine Reduktion von Fehlern in den Testfällen erreicht. Dies bedeutet, dass das eine höhere Qualität aufweisende Testverfahren ebenfalls zu Produkten mit höherer Qualität führt. Ferner wird durch die Automatisierung desjenigen Teils des Testverfahrens, der die höchste Fehlerempfänglichkeit aufweist, die zur Durchführung benötigte Zeit wesentlich verkürzt. Schliesslich kann durch die Verwendung von bestehenden Werkzeugen zur Beschreibung einzelner Phasen der Testablauf wesentlich vereinfacht werden, da für die Phasenübergänge keine manuellen Anpassungen mehr notwendig sind.

Die Erfindung wird nachfolgend anhand von Zeichnungen beispielsweise näher erläutert. Dabei zeigt

Fig. 1      eine Testanordnung für eine Fernmeldeanlage zur Durchführung des erfindungsgemässen Testverfahrens,

Fig. 2      einen möglichen Ablauf des erfindungsgemässen Testverfahrens,

Fig. 3      ein Meldungsdiagramm für einen Verbindungsaufbau zwischen zwei Teilnehmer der Fernmeldeanlage,

Fig. 4      ein Meldungsdiagramm mit in einer Testphase übermittelten Meldungen,

Fig. 5      zwei Meldungsdiagramme mit zwei Alternativen für den Abbau der Verbindung zwischen den beiden Teilnehmer und

Fig. 6      ein Phasenmodell zur Beschreibung von kompletten Testfällen durch Zusammenschalten von verschiedenen Meldungsdiagrammen.

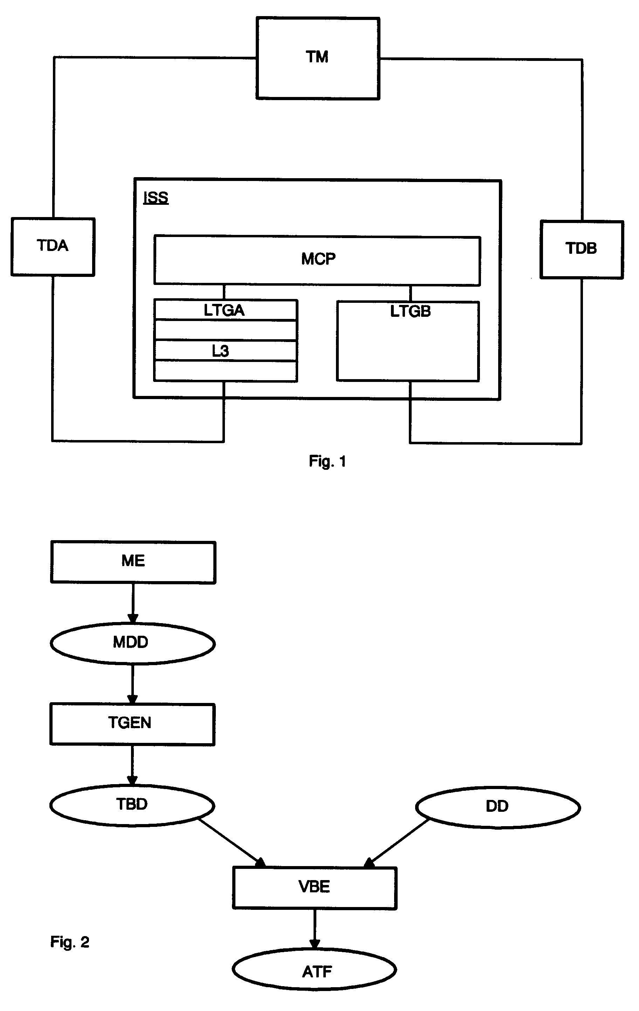

Fig. 1 zeigt eine im erfindungsgemässen Verfahren verwendete Testanordnung bestehend aus einer Testverwaltungseinheit TM, zwei Testgeräten TDA und TDB und einem Vermittlungssystem ISS, das beispielsweise nach ISDN- (Integrated Services Digital Network)- Normen aufgebaut ist und in dem im wesentlichen zwei Netzbaugruppen LTGA und LTGB und ein Hauptrechner MCP enthalten ist, wobei in der Netzbaugruppe LTGA andeutungsweise eine Protokollschicht L3 dargestellt ist. Die Testverwaltungseinheit

4

TM stellt die eigentliche Testumgebung mit sämtlichen Schnittstellen zu der zu testenden Fernmeldeanlage dar. Von einem an die Fernmeldeanlage angeschlossenen Teilnehmer ist lediglich ein Normtyp für Schnittstellen vorhanden, an die normalerweise Endgeräte - wie Telefonapparate, Fernkopierer, etc. - und zu Testzwecken die Testgeräte TDA und TDB angeschlossen werden. Die Testverwaltungseinheit TM ist demzufolge über das Testgerät TDA bzw. TDB mit der Netzbaugruppe LTGA bzw. LTGB des Vermittlungssystems ISS über standardisierte Schnittstellen verbunden, die nach der CCITT- Empfehlung Q.931 realisiert und in der Protokollschicht L3 der Netzbaugruppen LTGA und LTGB implementiert sind. Die weiteren Schnittstellen - insbesondere diejenigen, welche die Netzbaugruppen LTGA und LTGB mit dem Hauptrechner MCP verbinden - sind herstellerabhängig und werden demzufolge in einem solchen Anpassungstest nur indirekt überprüft. Der Hauptrechner MCP enthält neben den in einer Fernmeldeanlage üblicherweise enthaltenen Vermittlungseinrichtungen auch die zentralen Kontrolleinheiten. Weitere Angaben diesbezüglich sind beispielsweise aus "ISDN - Das dienstintegrierte digitale Nachrichtennetz", Dritte Auflage, Springer-Verlag, 1990 zu entnehmen.

Neben der Steuerung der Testgeräte TDA und TDB zeichnet die Testverwaltungseinheit TM auch den gesamten Testablauf und die dabei entstehenden Resultate auf.

Fig. 2 zeigt den prinzipiellen Ablauf des erfindungsgemässen Testverfahrens, wie es insbesondere in der Testverwaltungseinheit TM (Fig. 1) angewendet wird. Die eigentlichen Verfahrensschritte sind dabei mit Rechtecken und die Schnittstellen zwischen diesen mit Ellipsen dargestellt.

Der Ausgangspunkt des erfindungsgemässen Verfahrens ist eine Eingabeeinheit ME, in die Meldungen mit Hilfe von graphischen Meldungsdiagrammen in der Form von erweiterten "Message Sequence Charts" (CCITT- Empfehlung Z.120) eingegeben werden. Neben diesen Meldungsspezifikationen werden gleichzeitig auch weitere Angaben eingegeben, wie beispielsweise Testeinschränkungen oder entsprechende Verweise auf an anderen Stellen aufgeführte Testeinschränkungen oder mögliche Kombinationsarten von bestehenden Meldungsdiagrammen. Die Eingabeeinheit ME transformiert anschliessend die eingegebenen graphischen Meldungsdiagramme in eine Textform, die in einer Meldungsdefinitionsdatei MDD gespeichert wird.

Die Meldungsdefinitionsdatei MDD dient anschliessend als Eingangsinformation für einen Testgenerator TGEN, der die in Textform beschriebenen Meldungsdiagramme in einen dynamischen Teil einer Testbeschreibungssprache TTCN- (Tree and Tabular Combined Notation, ISO/IEC JTC 1/SC21, Information Technology - Open Systems Interconnection - Conformance Testing Methodology and Framework - Part 3: The Tree and Tabular Combined Notation, International Standard 9646-3, ISO/IEC, 1992) umsetzt. Unter dem dynamischen Teil werden dabei die nicht mit Daten angereicherten Testfälle bezeichnet. Der dynamische Teil wird demzufolge zu einem spezifischen (statischen) Testfall, wenn die Testfälle mit Daten angereichert werden. Die TTCN- Testfälle in TTCN/MP- Form werden in einer Testbeschreibungsdatei TBD abgelegt.

In einer Verbindungseinheit VBE werden die in der Testbeschreibungsdatei TBD abgelegten Testfälle des Testgenerators TGEN mit in einer Datentypendatei DD abgelegten Datentypen, Daten und Testeinschränkungen vervollständigt. In diesem Verfahrensschritt entstehen demzufolge die oben erwähnten statischen Testfälle. Ferner berechnet die Verbindungseinheit VBE auch Referenzen zu Testeinschränkungen, aus denen weitere spezifische Testeinschränkungen der vorgesehenen Testfälle resultieren können. Die ausführbaren Testfälle werden schliesslich in einer sogenannten Testdatei ATF für den Test bereitgestellt.

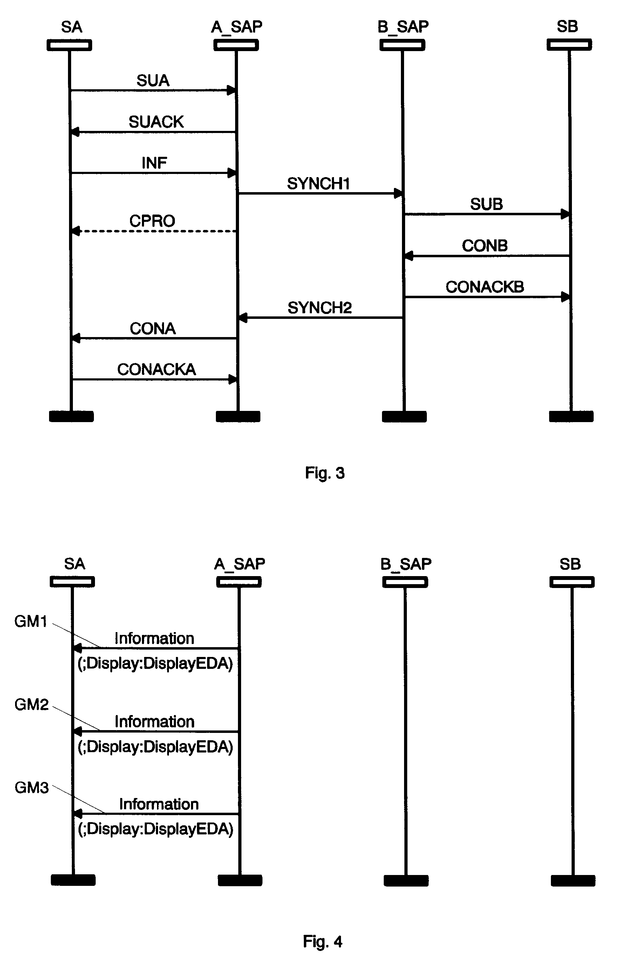

Die folgenden Erläuterungen enthalten Ausführungen zu den Fig. 3 bis 5, in denen Meldungsdiagramme beschrieben werden. Bei all diesen Figuren wird von vier Instanzen ausgegangen, nämlich von zwei Teilnehmerinstanzen SA und SB und zwei Netzwerkinstanzen A_SAP und B_SAP. Während die Teilnehmerinstanzen SA und SB die Handlungen der Testendgeräte TDA und TDB (Fig. 1) darstellen, repräsentieren die Netzwerkinstanzen A_SAP und B_SAP die netzseitigen Schnittstellen zum Fernmeldenetz ISS (Fig. 1).

Die anzuwendende Norm für Meldungsdiagramme ist die CCITT- Empfehlung Z.120, die sowohl eine graphische als auch eine Beschreibung in Textform beinhaltet. Obwohl beide Darstellungsarten ineinander umwandelbar sind, wird in der vorliegenden Erfindung die graphische Darstellung bevorzugt. Allerdings können Meldungsdiagramme auch in Textform beschrieben werden und im erfindungsgemässen Verfahren eingesetzt werden, worauf ausdrücklich hingewiesen wird. Insbesondere ist auch eine Mischform vorteilhaft, wobei in der Beschreibungsphase von der graphischen Darstellungsart profitiert wird und in der Implementationsphase von der Darstellung in Textform gebraucht gemacht wird. Dies lässt auch die Möglichkeit offen, verschiedene bereits vorhandene graphische Werkzeuge zur Erstellung von Meldungsdiagrammen in der Beschreibungsphase zu verwenden.

In der gaphischen Darstellungsart entspricht das zeitliche Auftreten der Meldungen der Meldungsfolge, die sich aus dem Lesen der Meldungsdiagramme von oben nach unten ergibt.

Fig. 3 zeigt in einem Meldungsdiagramm den Meldungsfluss für den Aufbau einer Verbindung zwischen den beiden Teilnehmerinstanzen SA und SB über die Netzwerkinstanzen A_SAP und B_SAP. Normalerweise befindet sich das Gesamtsystem bezüglich den beiden Teilnehmerinstanzen SA und SB in einem Wartezustand, bis zu einem Zeitpunkt eine Verbindung vom Testendgerät TDA zu TDB (Fig. 1) aufgebaut werden soll. Dazu wird von der Teilnehmerinstanz SA eine Aufbaumeldung SUA an die Netzwerkinstanz A_SAP abgesetzt, die diese mit einer Bestätigungsmeldung SUACK bestätigt. Es folgt anschliessend eine Informationsmeldung INF, die neben weiteren Angaben eine Zieladresse - im vorliegenden Fall diejenige vom Testendgeräte TDB - enthält und die an die Netzwerkinstanz A_SAP übermittelt wird. Erst jetzt wird innerhalb des Vermittlungssystems ISS (Fig. 1) die Verbindung weitergeschaltet, was stellvertretend für alle Abläufe im Vermittlungssystem ISS (Fig. 1) mit einer Synchronisationsmeldung SYNCH1 zwischen den beiden Netzwerkinstanzen A_SAP und B_SAP dargestellt ist. Diese Synchronisationsmeldung SYNCH1 entspricht somit nicht einer tatsächlich existierenden Meldung zwischen den Netzwerkinstanzen A_SAP und B_SAP, sondern dient vielmehr zur Festlegung der zeitlichen Folge zwischen den beiden Netzwerkinstanzen A_SAP und B_SAP. Die Synchronisationsmeldung SYNCH1 ist ein Meldungstyp, der nicht zu den Standardmeldungsdiagrammen der CCITT- Empfehlung Z.120 zählt und demzufolge als Erweiterung anzusehen ist.

Nach dem Eintreffen der Synchronisationsmeldung SYNCH1 in der Netzwerkinstanz B_SAP kann diese eine Aufbaumeldung SUB auslösen, die an die Teilnehmerinstanz SB gerichtet wird. Die Synchronisationsmeldung SYNCH1 ist also nicht ein Auslöser für die Aufbaumeldung SUB, sondern legt lediglich den frühest möglichen Zeitpunkt für diese fest. Ist der Verbindungsaufbau erfolgreich, so bestätigt dies die Teilnehmerinstanz SB mit einer Verbindungsmeldung CONB an die Netzwerkinstanz B_SAP, die dies einerseits der Teilnehmereinheit SB mit der Bestätigungsmeldung CONACKB, andererseits der Netzwerkinstanz A_SAP mit der Synchronisationsmeldung SYNCH2 mitteilt. Die Synchronisationsmeldung SYNCH2 legt dabei wiederum den frühest möglichen Zeitpunkt fest, an dem an die Teilnehmerinstanz SA eine Verbindungsmeldung CONA gesandt werden kann. Anschliessend wird das Prozedere für den Verbindungsaufbau durch das Übermitteln einer Bestätigungsmeldung CONACKA von der Teilnehmerinstanz SA an die Netzwerkinstanz A_SAP abgeschlossen.

In der erwähnten Implementationsphase werden mit Hilfe eines im Testgenerators TGEN (Fig. 2) ablaufenden Algorithmus die TTCN- Testfälle generiert, wobei sämtliche Handlungen der Testverwaltungseinheit TM (Fig. 1) aus den beispielsweise anhand Fig. 3 angegebenen Meldungsdiagrammen entnommen und in der TTCN- Notation beschrieben werden. Während dieses Transformationsvorganges sind die verschiedenen Bedeutungen und Eigenarten der Meldungsdiagramme und der TTCN- Notationen zu berücksichtigen. Voraussetzung dieser automatischen Erstellung der möglichen Testfälle ist, dass die Meldungsdiagramme sämtliche Handlungen der Testverwaltungseinheit TM (Fig. 1) sowie alle weiteren relevanten Informationen - wie beispielsweise Informationen, die die Synchronisation der Testverwaltungseinheit TM mit der Vermittlungseinheit ISS (Fig. 1) betreffen - enthalten. Neben dem Senden und Empfangen von Meldungen kann die Testverwaltungseinheit TM (Fig. 1) unter anderem Zeitabläufe oder die Anzahl der Meldungswiederholungen überwachen.

Das anhand Fig. 3 erläuterte Meldungsdiagramm entspricht weitgehend der in der CCITT- Empfehlung Z.120 angegebenen Norm. Abweichungen sind bei dieser Beschreibung der Testfälle nur selten notwendig und beschränken sich auf Vereinfachungen oder auf eine andere, oftmals kürzere Schreibweise, als in der Norm vorgesehen ist.

Grundsätzlich sind auch Situationen möglich, in denen Meldungen vorhanden sind oder auch fehlen können, ohne dass dabei Konsequenzen im weiteren Testverlauf auftreten. Da die Testverwaltungseinheit TM (Fi.g 1) solche Meldungen kennen muss, sind sie im Meldungsdiagramm auch entsprechend anzugeben. Eine derartige optionale Meldung ist eine in Fig. 3 strichliniert angegebene Rufmeldung CPRO, die unmittelbar nach dem Senden der Informationsmeldung INF durch die Teilnehmerinstanz SA an die Netzwerkinstanz A_SAP eintreffen kann. Ob diese Rufmeldung CPRO von der Netzwerkinstanz A_SAP ausgelöst wird oder nicht, hängt alleine von der Konfiguration der Vermittlungseinheit ISS (Fig. 1) ab.

Eine weitere Sonderheit in Bezug auf die normierten Meldungsdiagramme bilden die bereits erwähnten Synchronisationsmeldungen SYNCH1 und SYNCH2. Im angegebenen Beispiel von Fig. 3 werden diese Synchronisationsmeldungen SYNCH1 und SYNCH2 lediglich zur Steuerung von aufeinanderfolgenden Ereignissen zwischen verschiedenen Instanzen verwendet. Es ist jedoch auch ausdrücklich zulässig, dass verschiedene Instanzen von verschiedenen Testverwaltungseinheiten aufeinander abgestimmt werden.

Schliesslich sind als zusätzliche Erweiterung auch Schleifen (Loops) in Meldungsdiagrammen zulässig. Mehrere Testfälle benötigen nämlich gewisse Meldungen oder spezifische Teile von Meldungssequenzen, die mehrfach wiederholt werden sollen. Die Anzahl der Wiederholungen kann dabei statisch vorgegeben oder dadurch definiert werden, dass während einer bestimmten Zeit Wiederholungen möglich sind.

Eine mögliche Anwendung von Schleifen in einem Meldungsdiagramm ist in Fig. 4 dargestellt, in dem nach einem Verbindungsaufbau zwischen zwei Teilnehmern - wie in Fig. 3 dargestellt - periodisch wiederkehrende Gebührenmeldungen GM1 bis GM3 von der Netzwerkinstanz A_SAP an die Teilnehmerinstanz SA beispielsweise zur Anzeige der Verbindungskosten beim Teilnehmerendgerät gesendet werden. In diesem einfachen Testfall sind die drei Gebührenmeldungen GM1 bis GM3 in Fig. 4 einzeln aufgeführt. In einem komplizierteren Testfall wäre es jedoch zweckmässig eine Schleife anzugeben, womit die periodisch wiederkehrenden Meldungen einfach eingegeben werden können. Dazu wurden die Standardmeldungsdiagramme sowohl mit einer Zeitschleife als auch mit einer Zählschleife ausgestattet.

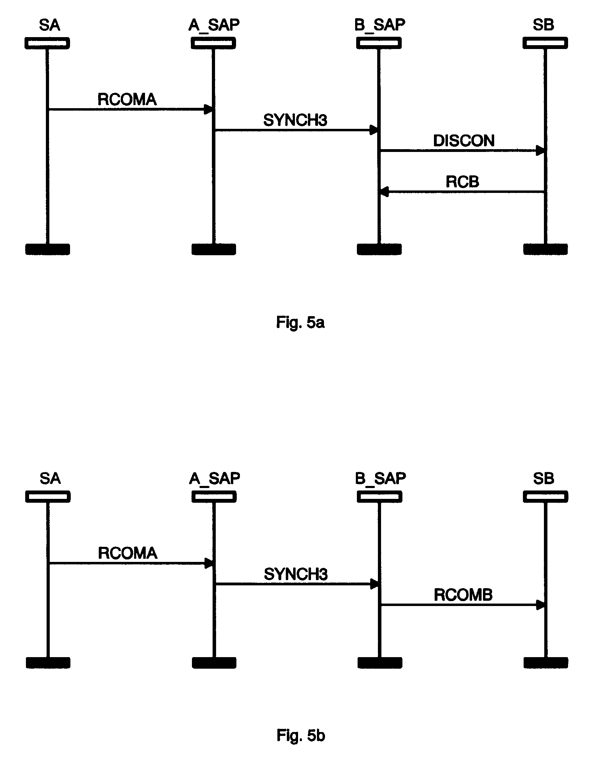

Die Fig. 5a und 5b zeigen zwei Möglichkeiten, eine stehende Verbindung zwischen den beiden Testendgeräten TDA und TDB abzubauen. In beiden Fällen wird von der Teilnehmerinstanz SA eine Abbaumeldung RCOMA an die Netzwerkinstanz A_SAP übermittelt, die ihrerseits eine Synchronisationsmeldung SYNCH3 an die Netzwerkinstanz B_SAP sendet. Die beiden Testfälle unterscheiden sich erst in der letzten Stufe des Verbindungsabbaus: Während im einen Fall der Fig. 5a an die Teilnehmerinstanz SB eine Abbaumeldung DISCON übermittelt wird, die durch die Bestätigungsmeldung RCB bestätigt wird, wird der Verbindungsabbau in dem in Fig. 5b dargestellten Fall mit einer einzigen Abbaumeldung RCOMB an die Teilnehmerinstanz SB abgeschlossen.

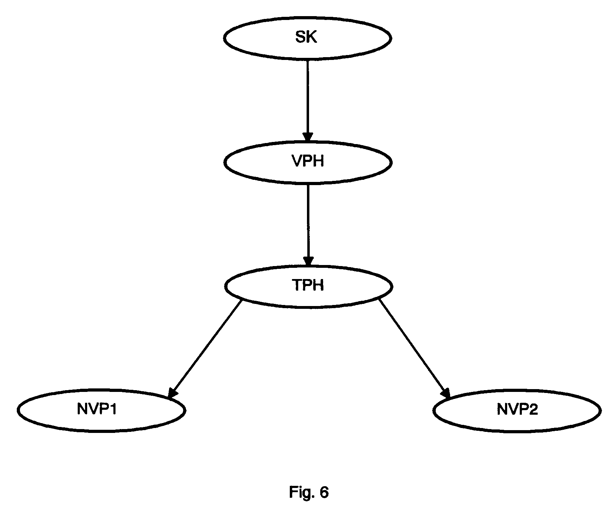

Der Meldungsfluss des anhand der Fig. 3, 4 und 5 erläuterten Testfalls zur Überprüfung der Gebührenmeldungen GM1 bis GM3 (Fig. 4) können weiter abstrahiert auf einfache Weise graphisch dargestellt werden. Fig. 6 zeigt den Testfall aufgeteilt in einen Superknoten SK, eine Vorverarbeitungsphase VPH, einer Testphase TPH und zwei alternative Nachverarbeitungsphasen NVP1 und NVP2. Während der Superknoten SK lediglich den Ausgangspunkt des Testfalles beschreibt, repräsentiert jede dargestellte Ellipse ein Meldungsdiagramm. In der Vorverarbeitungsphase VPH wird der anhand Fig. 3 erläuterte Meldungsaustausch beschrieben, der vom Wartezustand in den Zustand führt, in dem die Gebührenmeldungen GM1 bis GM3 (Fig. 4) überprüft werden können, was in der Testphase TPH vorgenommen wird. Die Nachverarbeitungsphasen NVP1 und NVP2 beinhalten den Verbindungsabbau, der das System in den Wartezustand zurückführt. Für den vorliegenden Testfall sind zwei Alternativen möglich, die anhand Fig. 5a und 5b erläutert wurden. Um den gesamten Testfall abschliessend und komplett beschreiben zu können, sind beide Nachverarbeitungsphasen notwendig, wobei die Alternativen ausgehend von der Testphase gleichberechtigt sind.

Die graphische Darstellung in der in Fig. 6 gezeigten Art erlaubt eine übersichtliche und einfache Handhabung von Meldungsdiagrammen. Es können damit vollständige Testfälle aus bestehenden bereits vorhandenen Meldungsdiagrammen durch einfaches Verbinden mit Pfeilen zusammengesetzt werden, wobei bei vorhandenen Alternativen einfach mehrere Phase an denselben Knoten eingefügt werden. Ferner kann die graphische Darstellungsart auch verwendet werden, um Rückkopplungen zu spezifizieren. In einem solchen Fall würde das Ablaufdiagramm Schleifen enthalten, sodass das Verhalten dieses Testfalls unendlich lange dauern würde. Da ein Testfall in endlicher Zeit abgeschlossen werden soll, sind prinzipiell ledlich Baumstrukturen zugelassen, obwohl auch Schleifen, die eine vordefinierte Anzahl durchlaufen werden sollen, durchaus als sinnvoll angesehen werden, weshalb dies auch als weitere Ausführungsform des erfindungsgemässen Verfahrens betrachtet wird. Schliesslich ist es auch möglich weitere Operatoren zur Verbindung von Meldungsdiagrammen anzugeben. Doch reichen für die Beschreibung von Testfällen die beiden Operatoren "Sequenz" - wie beispielsweise zwischen dem Superknoten SK und der Vorverarbeitungsphase VPH - und "Alternative" - wie beispielsweise beim Übergang von der Testphase TPH zu den beiden Nachverarbeitungsphasen NVP1 und NVP2 - vollständig aus.

Der Aufbau von Meldungsdiagrammen in der oben genannten Art vereinfacht den Testaufbau wesentlich, da nicht selten solche Testabläufe identische Teile aufweisen. Sind solche Teile beispielsweise in einer Bibliothek einfach und schnell verfügbar, kann der Aufbau von Testfällen erheblich beschleunigt werden.

In den vorangegangenen Erläuterungen wurde gezeigt, wie die Testfälle anhand von Meldungsdiagrammen spezifiziert werden können und wie diese zum dynamischen Teil eines TTCN- Testfalls automatisch erzeugt werden. Um jedoch komplette TTCN- Testfälle zu erhalten, müssen die Meldungsdiagramme mit Datentypen und sowohl mit vorgegebenen als auch mit spezifischen Testeinschränkungen in Beziehung gebracht werden.

Ausgangspunkt für die Definitionen von Datentypen und für vorgegebene Testeinschränkungen ist die Annahme, dass diese Definitionen in einer maschinenlesbaren Form vorhanden sind. Für die Datenbeschreibungen kann dies beispielsweise ASN.1 sein (Abstract Syntax Notation No. 1, CCITT- Empfehlung X.208). Die Beziehung zwischen diesen Definitionen und den Meldungen in den Meldungsdiagrammen sind dabei implizit durch Meldungsnamen definiert. Der Meldungname bezieht sich somit auf eine Datentypdefinition, die ihrerseits Typendefinitonen von Meldungsparametern beinhaltet oder auf diese Bezug nimmt. Zur Verdeutlichung wird dies anhand des in den Fig. 3 bis 5 angegebenen Beispiels im folgenden erläutert:

Die Gebührenmeldungen GM1 bis GM3 (Fig. 4) in der Testphase TPH (Fig. 6) beziehen sich auf die folgenden ASN.1- Definitionen, die an die Beschreibungsweise in der TTCN- Notation angelehnt ist:

| ASN1 ASP Type Definition | |
|---|---|
| ASP Name: | Information |
| PCO Type: | A |
| Comments: | |
| Type Definition | |
| SEQUENCE | |
| {ProtocolDiscriminator [0] ProtocolDiscriminator_type, | |
| CallReference [1] CallReference_type, | |
| MessageType [2] MessageType_type, | |
| SendingComplete [3] SendingComplete_type OPTIONAL, | |
| Display [4] Display_type OPTIONAL, | |
| KeypadFacility [5] KeypadFacility_type OPTIONAL, | |
| CalledPartyNumber [6] CalledPartyNumber_type OPTIONAL} | |
| Detailed Comments: | |

Dieser Testfall überprüft einen Teil des Formats des Parameters "Display", der vom Datentyp "Display_type" ist.

Für die meisten Meldungen und Meldungsparameterwerte stellt das verwendete Protokoll vorgegebene Testeinschränkungen sowohl für einzelne Werte als auch für Wertebereiche zur Verfügung. So existieren auch für den in Fig. 4 dargestellten Testfall Testeinschränkungen, die aus der folgenden Tabelle entnommen werden können:

| ASN1 ASP Constraint Declaration | |
| --- | --- |
| Constraint Name: | InformationDefRec |
| ASP Type: | information |
| Derivation Path: | |
| Comments: | Vorgegebene Testeinschränkungen für die Gebührenmeldungen GM1 bis GM3, die an die Testverwaltungseinheit TM (Fig. 1) gesendet wird. |
| Constraint Value | |
| {ProtocolDiscriminator ProtocolDiscriminatorDefRec, | |
| CallReference CallReferenceDefRec, | |
| MessageType '01111011'B, | |
| SendingComplete SendingCompleteDefRec IF_PRESENT, | |
| Display DisplayDefRec IF_PRESENT, | |
| KeypadFacility KeypadFacilityDefRec IF_PRESENT, | |
| CalledPartyNumber CalledPartyNumberDefRec IF_PRESENT} | |
| Detailed Comments: | |

Die Testeinschränkungen beziehen sich auf die vorgegebenen Einschränkungen für die Parameterwerte.

Im anhand der Fig. 3 bis 5 beschriebenen Testfall entspricht die Informationsmeldung INF (Fig. 3) in der Vorverarbeitungsphase VPH (Fig. 6) den Gebührenmeldungen GM1 bis GM3 in der Testphase TPH (Fig. 6). Der Unterschied zwischen diesen beiden Meldungen liegt darin, dass in der Vorverarbeitungsphase VPH die Meldung durch die Teilnehmerinstanz SA, d.h. durch die Testverwaltungseinheit TM (Fig. 1), gesendet und in der Testphase TPH von der Teilnehmerinstanz SA empfangen wird. Während dabei die Meldungstypendefinition identisch ist, weichen die Testeinschränkungen voneinander ab. Die von der Testverwaltungseinheit TM stammende Meldung muss nämlich konkrete Parameterwerte enthalten, wie die folgenden Tabelle zeigt:

| ASN1 ASP Constraint Declaration | |
| --- | --- |
| Constraint Name: | InformationDefSen |
| ASP Type: | information |
| Derivation Path: | |
| Comments: | Vorgegebene Testeinschränkungen für die Informationsmeldung INF, die von der Testverwaltungseinheit TM (Fig. 1) gesendet wird. |
| Constraint Value | |
| {ProtocolDiscriminator ProtocolDiscriminatorDefSend, | |
| var_CallReference CallReferenceDefSend, | |
| var_MessageType '01111011'B, | |
| var_CalledPartyNumber CalledPartyNumberDefSend} | |
| Detailed Comments: | |

In der angegebenen Testeinschränkung wird auf andere Einschränkungsdefinitionen Bezug genommen. Ferner ist kein Parameter "Display" vorhanden, da die CCITT- Empfehlung Q.931 verlangt, dass eine von der Testverwaltungseinheit TM (Fig. 1) stammende Informationsmeldung INF (Fig. 3) nicht zulässig ist. Aus diesem Grund ist in der oben angeführten Meldungsdefinitonstabelle der Parameter "Display" als Option angegeben.

Für die vorgegebenen Testeinschränkungen sind die Meldungsnamen für die Erzeugung von Einträgen in eine TTCN- Testtabelle ausreichend. Die Norm für die Meldungsdiagramme muss aus diesem Grund nicht geändert werden. Eine andere Situation kann sich allenfalls ergeben, falls verschiedene vorgegebene Testeinschränkungen für verschiedene Testfälle erstellt werden müssen. Eine Verwechslung von Testeinschränkungen kann allerdings auf einfache Weise durch konsequente Namensvergebung verhindert werden.

Neben den erwähnten vorgegebenen Testeinschränkungsdefinitonen existieren auch sogenannte spezifische Testeinschränkungen, die insbesondere aus den folgenden zwei Gründen von Wichtigkeit sind: Um bestimmte Situationen testen zu können, ist es erstens notwendig, das zu testende Protokoll in einen bestimmten Zustand zu bringen, von dem aus weitere Tests vorgenommen werden können. Zweitens soll die Möglichkeit gegeben sein, Werte von Meldungsparametern einzuschränken.

Spezifische Testeinschränkungen müssen formell definiert sein, wenn die Testfälle implementiert werden. Bei der Verfolgung des Ziels, die Implementation der Testfälle zu automatisieren, dürfen weitere Anforderungen und Standards nicht weiter berücksichtigt werden. Dies wird dadurch erreicht, indem die mit den Daten zusammenhängenden Aspekte im ganzen Testverfahren formalisiert werden. Konkret bedeutet dies, dass die spezifischen Testeinschränkungen in die abstrakten Testfallbeschreibungen eingebunden werden. Dazu stehen grundsätzlich zwei Möglichkeiten zur Verfügung: Entweder werden die spezifischen Testeinschränkungen direkt in die Meldungsdiagramme miteingebunden oder sie werden an anderen Stellen definiert, zu denen Bezüge von den Meldungsdiagrammen hergestellt werden. In den folgenden Ausführungen wird auf die zweite Lösungsmöglichkeit näher eingegangen, wobei diese mit entsprechenden Änderungen an die erste Lösungsmöglichkeit angepasst werden kann.

Meldungsdiagramme, die Bezüge auf spezifische Testeinschränkungen enthalten, ermöglichen neue spezifische Testeinschränkungen durch einfache Modifikationen von bestehenden Testeinschränkungen zu definieren. Ferner ermöglicht diese Realisierungsform auch eine Änderung von spezifischen Testeinschränkungen direkt in den Meldungsdiagrammen, sofern in der Testeinschränkung lediglich ein einzelner konkreter Wert enthalten ist. Zur Realisierung der bevorzugten Lösungsmöglichkeit werden in einer Referenzsprache formulierte Ausdrücke verwendet, die direkt zu den Meldung in den Meldungsdiagrammen eingefügt werden. In Fig. 4 sind solche Ausdrücke bei den drei Gebührenmeldungen GM1 bis GM3 eingefügt worden. Dabei ist es nicht notwendig, die Meldungsdiagramme durch solche Bezugsangaben zu erweitern, da in der CCITT- Empfehlung Z.120 die Möglichkeit Ausdrücke in runden Klammern mit Parameterausdrücken für die Meldungen vorgesehen ist. Basierend auf diesen Ausdrücken ist es somit möglich, die Berechnung zu spezifischen Testeinschränkungen innerhalb der TTCN- Tabellen vorzunehmen und die auf bestehende Einschränkungen basierenden spezifischen Testeinschränkungen zu erzeugen.

Der in der Referenzsprache angegebene Ausdruck (;Display:DisplayEDA) bei den Gebührenmeldungen GM1 bis GM3 (Fig. 4) gibt an, dass die zu verwendende Testeinschränkung eine Modifikation der vorgesehenen Testeinschränkung ist: Die vorgesehene Testeinschränkung für den Parameter "Display" soll durch einen in der spezifischen Testeinschränkung definierten Parameter "DisplayEDA" ersetzt werden.

**Patentansprüche**

1. Verfahren zum Testen von Fernmeldeanlagen oder Teilen davon, **dadurch gekennzeichnet**,
   dass in einem ersten Schritt mit einer Eingabeeinheit (ME) Meldungsdiagramme erstellt werden,
   dass in einem zweiten Schritt diese Meldungsdiagramme mit Hilfe eines Testgenerators (TGEN) in einen dynamischen Teil transformiert werden,
   dass in einem dritten Schritt dieser dynamische Teil in einer Verbindungseinheit (VBE) mit zu übertragenden Daten angereichert und mindestens zu einer Teilmenge der möglichen Testfälle verbunden wird.

2. Verfahren nach Anspruch 1, **dadurch gekennzeichnet**,
   dass die Eingabeeinheit (ME) eine Meldungsdefinitionsdatei (MDD), der Testgenerator (TGEN) eine Testbeschreibungsdatei (TBD) und die Verbindungseinheit (VBE) eine Testdatei (ATF) erzeugen und
   dass die zu übertragenden Daten und deren Datentypdefinitionen aus einer Datentypendatei (DD) entnommen werden.

**3.** Verfahren nach Anspruch 1 oder 2, **dadurch gekennzeichnet**, dass die Meldungsdiagramme als Graphik und/oder als Text eingegeben werden.

**4.** Verfahren nach einem der vorangehenden Ansprüche, **dadurch gekennzeichnet**, dass die Anzahl der möglichen Testfälle mit Hilfe von Testeinschränkungen auf ausgewählte Testfälle eingeschränkt wird.

**5.** Verfahren nach Anspruch 4, **dadurch gekennzeichnet**, dass die Testeinschränkungen in der Datentypendatei (DD) enthalten sind.

**6.** Verfahren nach einem der vorangehenden Ansprüche, **dadurch gekennzeichnet**, dass die Meldungsdiagramme im wesentlichen der CCITT- Empfehlung Z.120 entsprechen.

**7.** Verfahren nach Anspruch 6, **dadurch gekennzeichnet**, dass die CCITT- Empfehlung Z.120 zur Anpassung an die Testfallbeschreibung mit optimalen Meldungen (CPRO), Synchronisationsmeldungen (SYNCH1, SYNCH2, SYNCH3) und/oder mit Schleifen erweitert wird.

**8.** Verfahren nach einem der vorangehenden Ansprüche, **dadurch gekennzeichnet**, dass zur Beschreibung des dynamischen Teils TTCN- Notationen verwendet werden.

**9.** Verfahren nach einem der vorangehenden Ansprüche, **dadurch gekennzeichnet**, dass Daten und Testeinschränkungen in der Spezifikationssprache ASN.1 und/oder TTCN beschrieben werden.

**10.** Verfahren nach einem oder mehrer der Ansprüche 2 bis 9, **dadurch gekennzeichnet**, dass ein für eine Meldung vorgesehener Meldungsname für die Referenzierung auf Datentypdefinitionen verwendet wird.

**11.** Verfahren nach Anspruch 10, **dadurch gekennzeichnet**, dass die Datentypdefinitionen ihrerseits Typendefinitionen von Meldungsparametern beinhalten oder auf solche Bezug nehmen.

**12.** Verfahren nach Anspruch 10 oder 11, **dadurch gekennzeichnet**, dass die Datentypdefinitionen auch Testeinschränkungen enthalten.

**13.** Verfahren nach einem der vorangehenden Ansprüche, **dadurch gekennzeichnet**,
dass für verschiedene Phasen (VPH, TPH, NVP1, NVP2) Meldungsdiagramme erstellt werden, die durch Symbole ersetzt werden und
dass Testabläufe mit diesen Symbolen beschrieben werden, wobei als Operatoren Sequenzen, Alternativen und Schleifen zugelassen sind.

EP 0 665 664 A1

Fig. 1

Fig. 2

SA     A_SAP     B_SAP     SB

SUA

SUACK

INF

SYNCH1

SUB

CPRO

CONB

CONACKB

SYNCH2

CONA

CONACKA

**Fig. 3**

SA     A_SAP     B_SAP     SB

GM1

Information

(;Display:DisplayEDA)

GM2

Information

(;Display:DisplayEDA)

GM3

Information

(;Display:DisplayEDA)

**Fig. 4**

SA    A_SAP    B_SAP    SB

RCOMA

SYNCH3

DISCON

RCB

**Fig. 5a**

SA    A_SAP    B_SAP    SB

RCOMA

SYNCH3

RCOMB

**Fig. 5b**

Fig. 6

Europäisches
Patentamt

**EUROPÄISCHER RECHERCHENBERICHT**

Nummer der Anmeldung

EP 95 10 0395

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | INFORMATIK SPEKTRUM, Bd.13, Nr.2, April 1990, BERLIN(DE) Seiten 98 - 100 E.STOVEKEN 'DAS AKTUELLE SCHLAGWORT- TTCN' * das ganze Dokument * | 1-5,8-12 | H04L1/00 H04Q11/04 H04M3/24 |
| X | INFORMATION AND SOFTWARE TECHNOLOGY, Bd.32, Nr.6, Juli 1990, UK Seiten 613 - 624 S.ESWARA ET AL 'TEST SPECIFICATION IN TTCN USING INTERACTIVE EDITOR' * Seite 617, rechte Spalte, Zeile 21 - Seite 618, linke Spalte, Zeile 8 * | 1-5,8-12 | |
| X | 11TH INT. SYMP. 18-20 JUNI 1991-PROTOCOL SPECIFICATION, TESTING AND VERIFICATION, STOCKHOLM(SE) Seiten 283 - 298 U. BAR ET AL 'PRESENTATION LAYER CONFORMANCE TESTING WITH TTCN' * Absatz 3 * | 1-5,8-12 | |

**RECHERCHIERTE SACHGEBIETE (Int.Cl.6)**

H04L
H04Q
H04M

Der vorliegende Recherchenbericht wurde für alle Patentansprüche erstellt

| Recherchenort | Abschlußdatum der Recherche | Prüfer |
|---|---|---|
| DEN HAAG | 6. April 1995 | Vandevenne, M |